# EUROPÄISCHE PATENTSCHRIFT

(11) **EP 2 826 932 B1**
(45) Veröffentlichungstag und Bekanntmachung des Hinweises auf die Patenterteilung: **28.09.2016**
(21) Anmeldenummer: 14175703.9
(22) Anmeldetag: 03.07.2014
(51) Int. Cl.: E04H 12/08, F16L 23/00, E02D 27/42, E21B 17/00, E21B 19/00, F16L 15/00, F16L 17/00, E02B 17/00

(54) **Flansch zur Verbindung zweier Bauteile, insbesondere eines Turms einer Windkraftanlage**
Flange for connecting two structural components, in particular a tower of a wind power plant
Bride de liaison entre deux composants, en particulier une tour d'une éolienne

(30) Priorität: 12.07.2013 DE 102013213737
(43) Veröffentlichungstag der Anmeldung: 21.01.2015
(73) Patentinhaber: Siegthalerfabrik GmbH, 57080 Siegen (DE)
(72) Erfinder: Wolf, Dietmar, 57234 Wilnsdorf (DE); Nijsen, Andreas Jacobus Louis, 7521 AT Enschede (NL)
(74) Vertreter: Bendel, Christian

(56) Entgegenhaltungen:
- EP-A2- 0 091 254
- EP-A2- 2 048 357
- EP-A2- 2 077 363
- EP-B1- 0 957 233
- WO-A1-2011/163585
- GB-A- 2 064 041

## Beschreibung

Die Erfindung betrifft einen Flansch zur Verbindung zweier Bauteile eines Turms für eine Windkraftanlage nach Anspruch 1 sowie einen Rohrturm für eine Windkraftanlage mit einem erfindungsgemäßen Flansch, eine Rohrleitung mit einem erfindungsgemäßen Flansch und ein Verfahren zur Festlegung eines erfindungsgemäßen Flansches.

Aus der Praxis des Baus von Windkraftanlagen sind Türme bekannt, bei denen ringförmige Flanschteile an rohrförmige Abschnitte des Turms angeschweißt sind. Mittels der Flanschteile werden die einzelnen Abschnitte der Türme untereinander verbunden oder es erfolgt die Verbindung mit einer Turmbasis oder mit einem Turmkopf. Die Verbindung der Flanschteile erfolgt ausschließlich mittels einer Anzahl von Schraubenbolzen, die Bohrungen in den Flanschteilen durchgreifen und die Flanschteile mittels aufgeschraubten Muttern formschlüssig verbinden.

Allgemein sind Flansche für kleine Durchmesser nach Art von reibschlüssigen Steckverbindungen bekannt, bei denen leicht konische Flanschwände aufeinander geschoben werden, bis die Verbindung durch einen Reibschluss gehalten wird. Das Dokument EP-A-2077363 beschreibt einen Flansch zur Verbindung zweien Bauteile eines Turms für eine Windkraftanlage, der die Merkmale des Oberbegriffes des Anspruchs 1 umfasst.

Es ist die Aufgabe der Erfindung, einen Flansch anzugeben, der eine einfache Montage einer Windkraftanlage ermöglicht.

Diese Aufgabe wird für einen eingangs genannten Flansch erfindungsgemäß mit den kennzeichnenden Merkmalen des Anspruchs 1 gelöst. Das Festlegen der Flanschteile unter einem Fluiddruck zwischen den Flanschwänden ermöglicht eine deutlich größere Überlappung in der axialen Richtung, als es ohne den Fluiddruck möglich wäre. Dabei kann zugleich auf eine große Anzahl von einzelnen Bauteilen wie Schrauben und Muttern verzichtet werden. Es kann eine einfache und zugleich sichere Festlegung der Flanschteile und somit der Bauteile aneinander erfolgen.

Unter den Bauteilen im Sinne der Erfindung kann jedes über den Flansch zu verbindende Paar von Teilen verstanden werden, zum Beispiel Wellen, Rohre, Fundamente oder Ähnliches. Bevorzugt handelt es sich bei zumindest einem, insbesondere beiden Bauteilen um hohle Längskörper, insbesondere Rohre.

Unter einem Fluid im Sinne der Erfindung handelt es sich um jedes mit Druck beaufschlagbare, fließfähige Medium, umfassend Gase und Flüssigkeiten. Allgemein bevorzugt erfolgt die Druckbeaufschlagung hydraulisch durch ein flüssiges Fluid, wobei es sich bei dem Fluid z.B. um ein Hydrauliköl, ein Korrosionsschutzmittel oder sonstiges handeln kann. Alternativ oder ergänzend kann die Druckbeaufschlagung aber auch pneumatisch durch ein Gas erfolgen.

Die Flanschwände umlaufen die Achse jeweils vollständig. Allgemein vorteilhaft können die Flanschwände jeweils zylindrisch oder als Abschnitt eines Kegels ausgeformt sein, so dass sie rotationssymmetrisch um die Achse angeordnet sind. Es kann sich je nach Detailgestaltung aber auch um polygonal geformte Flanschwände handeln. Dabei wären die Flanschwände zum Beispiel als Oberfläche eines prismatischen Körpers mit mehreckigem Querschnitt ausgeformt. Die Ausrichtung der jeweiligen Flanschwand radial nach außen bzw. radial nach innen ist nicht in einem strengen Sinne einer zu einem Radius senkrechten bzw. zu der Achse parallelen Ausrichtung zu verstehen. Vielmehr sind die Flanschwände von bevorzugten Ausführungsformen der Erfindung meist um einen kleinen Winkel gegenüber der Achse geneigt. Dies führt zu einer konischen Form zumindest eines Abschnittes der Flanschwände, wodurch eine Montage je nach Anwendungsfall erleichtert wird. Ein solcher Winkel der Flanschwände gegenüber der Achse des Flansches beträgt bevorzugt zwischen 5 Grad und 20 Grad, besonders bevorzugt zwischen 7 Grad und 15 Grad.

Das Material der erfindungsgemäßen Flansche kann im Prinzip beliebig sein. Bevorzugt handelt es sich jedoch um Metall, insbesondere um Stahl.

In dem festgelegten Zustand berühren sich die innere und die äußere Flanschwand, so dass zumindest ein Reibschluss hergestellt ist, durch den die Flanschteile aneinander gehalten werden. Es ist durchaus möglich, dass sich die Flanschwände in dem druckbeaufschlagten Zustand während der Montage ebenfalls berühren können. In jedem Fall wird eine Reibung zwischen den Flanschwänden durch die Beaufschlagung mit dem Fluid herabgesetzt. Hierdurch wird eine Montage des Flansches bezüglich der erforderlichen Kräfte erheblich vereinfacht. oder erst ermöglicht. Unter einem Zwischenraum im Sinne der Erfindung wird der durch die Dichtmittel abgeschlossene, durch das Fluid befüllbare Bereich verstanden. Dabei kann es sich auch um einen Spalt zwischen den Flanschwänden handeln, der in idealisierter Form kein Volumen aufweisen muss.

Bei allgemein vorteilhaften Detailgestaltungen können die Dichtmittel eine oder mehrere Dichtlippen aufweisen, die an den Flanschwänden anliegen. Insbesondere kann dabei der Fluiddruck im Zwischenraum positiv auf die Dichtlippen wirken bzw. die Dichtlippen gegen die Flanschwand drücken, um eine verbesserte Abdichtung zu gewährleisten.

Bei einer bevorzugten Ausführungsform der Erfindung umfassen die Dichtmittel zumindest eine umlaufende Dichtung, die einen bevorzugt einstellbaren Anpressdruck auf die Flanschwände ausübt. Durch die Einstellung des Anpressdrucks kann eine ausreichende Abdichtung des Zwischenraums für das Fluid sichergestellt werden, und die Abdichtung kann an den jeweils erforderlichen Fluiddruck in dem Zwischenraum angepasst werden. In bevorzugter Detailgestaltung hat die Dichtung dabei einen umlaufenden Körper aus einem elastischen Material, wobei ein Hohlraum zumindest teilweise von dem Körper umfangen wird und durch ein Fluid einstellbar druckbeaufschlagt ist. Es kann sich bei einer möglichen Weiterbildung um einen vollständig in dem elastischen Körper der Dichtung angeordneten Hohlraum handeln. Alternativ oder ergänzend kann der Hohlraum aber auch von Dichtlippen des elastischen Körpers einerseits sowie den Flanschwänden andererseits ausgebildet werden. In jedem Fall kann dabei eine Druckfestigkeit der Dichtung gegenüber dem Fluiddruck des Zwischenraums dadurch erhöht werden, dass der Druck in dem Hohlraum der Dichtung erhöht wird.

Bei weiteren möglichen Weiterbildungen der Dichtung kann der Hohlraum segmentiert sein bzw. als Mehrzahl von separaten Hohlräumen vorliegen. Zum Beispiel können in der Umfangsrichtung mehrere Hohlräume hintereinander vorliegen, die jeweils über eigene Fluidzuführungen verfügen. Hierdurch lässt sich eine kontrollierte und gleichmäßige Druckbeaufschlagung der Dichtung sicherstellen. Zudem kann auf diese Weise eine kontrollierte Zentrierung der Flanschteile im Zuge der Montage vorgenommen werden.

Das Fluid des Hohlraums der Dichtung kann von dem Fluid des Zwischenraumes zwischen den Flanschwänden verschieden oder auch gleich sein. Besonders bevorzugt wird dabei der Fluiddruck in der Dichtung höher eingestellt als der Fluiddruck in dem Zwischenraum, so dass eine besonders sichere Abdichtung des Zwischenraums erzielt wird.

Bei einer besonders bevorzugten Weiterbildung der Erfindung ist das Fluid in dem Zwischenraum als flüssiges Korrosionsschutzmittel ausgebildet und verbleibt in dem festgelegten Zustand des Flansches zumindest teilweise in dem Zwischenraum. Hierdurch wird eine Korrosion in dem Flanschbereich auf einfache Weise vermieden. Unter einem Korrosionsschutzmittel im Sinne der Erfindung wird dabei jedes Fluid verstanden, das eine Korrosion gegenüber ungeschützten Umwelteinflüssen vermindert, zum Beispiel übliche Hydrauliköle oder auch spezielle Flüssigkeiten mit Korrosion hemmenden Zusätzen.

Allgemein vorteilhaft, aber nicht notwendig kann ein erfindungsgemäßer der Flansch nach einer Betriebszeit auch zerstörungsfrei wieder gelöst werden. Die Vermeidung von Korrosion im Flanschbereich stellt eine solche Lösbarkeit in besonderem Maße sicher.

Bei einer allgemein bevorzugten Ausführungsform der Erfindung ist an jeder der Flanschwände jeweils eine radial vorragende Struktur angeordnet, wobei die Strukturen der Flanschwände in dem festgelegten Zustand in der Richtung der Achse formschlüssig miteinander verkämmen. Unter einem Formschluss in der Richtung der Achse ist dabei jeder Formschluss zu verstehen, der bei einer axialen Zugbelastung ein Lösen des Flansches durch Überlappung der radial vorragenden Strukturen verhindert. Es kann sich dabei zum Beispiel um verkämmende Rillen und Nuten, um lokale und korrespondierende Vertiefungen, um Gewindegänge oder Ähnliches handeln. Es können je nach Anforderungen auch Strukturen vorgesehen sein, die ein zusätzliches, formschlüssiges Verkämmen in Umfangsrichtung bewirken.

Durch das formschlüssige Verkämmen in zumindest axialer Richtung wird eine über einen Reibschluss hinausgehende Sicherheit bei der Festlegung des Flansches erzielt.

Bei einer ersten bevorzugten Detailgestaltung umfassen die Strukturen zumindest einen Gewindegang, wobei das Verkämmen der Strukturen durch ein Verdrehen der Flanschteile zueinander erfolgt. Solche Gewindegänge können einen besonders großen Überlapp in radialer Richtung aufweisen, da sie sich im Zuge einer Montage des Flansches nicht in axialer Richtung überqueren müssen. Insbesondere bei großen Flanschdurchmessern, zum Beispiel zur Verbindung von Segmenten eines Rohrturms, kann eine Festlegung mittels einer Gewindeverbindung durch einen erfindungsgemäßen Flansch zweckmäßig sein, da die hier erforderlichen, hohen Drehmomente durch die Druckbeaufschlagung deutlich verringert werden.

Bei einer vorteilhaften Weiterbildung liegt die Anzahl der Gewindegänge zwischen 5 und 50, bevorzugt zwischen 5 und 30. Dabei beträgt ein maximaler Drehwinkel zur Festlegung der Flanschteile bevorzugt weniger als 180 Grad, besonders bevorzugt zwischen 10 Grad und 60 Grad. Eine Steigung der Gewindegänge ist als Winkel zwischen dem Gewindegang und einer zu der Flanschachse senkrechten Ebene definiert. In den vorgenannten Fällen ist die Steigung des Gewindes entsprechend groß ausgelegt und beträgt bevorzugt zwischen 2 Grad und 70 Grad, besonders bevorzugt zwischen 3 Grad und 20 Grad.

Mit einer solchen Auslegung der Gewindegänge bzw. der verkämmenden Strukturen können auch sehr große Bauteile wie etwa Turmsegmente, zum Beispiel von Windkraftanlagen, auf einfache Weise sicher aneinander festgelegt werden. Dabei können zudem weitere Vorgaben wie etwa eine minimale Vorspannkraft des festgelegten Flansches eingehalten werden.

Bei einer bevorzugten Weiterbildung ist es vorgesehen, dass zumindest ein letzter Abschnitt der Verdrehbewegung zum formschlüssigen Verkämmen durch ein Verstemmen der Flanschteile relativ zueinander erfolgt. Diese Verstellung kann zum Beispiel durch Ausüben von Kräften an entsprechenden Ausformungen der Flanschteile wie Vorsprüngen, Bohrungen oder Ähnlichen erfolgen. Die angreifenden relativen Kräfte zwischen den Flanschteilen sind dabei überwiegend in Umfangsrichtung gerichtet, um ein hohes Drehmoment zu erzeugen. Die Kräfte können insbesondere durch hydraulische Mittel, Keile und/oder ähnliche Mittel zur Krafteinleitung ausgeübt werden. Zweckmäßig wird dabei über den Umfang der Flanschteile verteilt an mehreren Stellen eine Kraft ausgeübt, um ein Verkanten der Flanschteile zu vermeiden.

Bei einer alternativen oder ergänzenden Detailgestaltung der Erfindung ist es vorgesehen, dass die Strukturen unter hydraulischer Druckbeaufschlagung des Zwischenraumes in der axialen Richtung übereinander verschiebbar sind. Dies ermöglicht eine einfache Auslegung der Strukturen, zum Beispiel als Mehrzahl von parallelen Stegen oder Ähnliches. Die Stege können je nach Anforderungen in Umfangsrichtung durchgängig sein oder auch unterbrochen. Ja nach Anforderungen können die Strukturen in der einen Flanschwand als Vorsprung und in der anderen Flanschwand als Vertiefung vorliegen. Bei einer einfachen und zweckmäßigen Detailgestaltung sind auf beiden Flanschwänden jeweils eine Mehrzahl von ringförmigen, konzentrischen und gleichmäßig beabstandeten Stegen vorgesehen, wobei im montierten Zustand die Stege der einen Flanschwand in die Zwischenräume zwischen den Stegen der anderen Flanschwand eingreifen.

Die radiale Höhe der Strukturen ist entsprechend einer durch die Druckbeaufschlagung des Zwischenraums erzielbaren, elastischen radialen Aufweitung des Abstandes zwischen den Flanschwänden auszulegen. Bevorzugt haben die Strukturen in der radialen Richtung einen Höhenunterschied im Bereich von einem zehntausendstel bis zu einem hundertstel, bevorzugt zwischen einem fünftausendstel und einem fünfhundertstel, eines maximalen Durchmessers der inneren Flanschwand.

Allgemein bevorzugt findet ein erfindungsgemäßer Flansch im Bereich großer Bauteile Anwendung. Insbesondere weist dabei die innere Flanschwand einen kleinsten radialen Durchmesser von wenigstens 1 Meter, weiter bevorzugt von wenigstens 2 Metern auf. Bei diesen Strukturgrößen wird die erfindungsgemäße, druckbeaufschlagte Festlegung gegenüber herkömmlichen Bauarten von Flanschen besonders effektiv und kostengünstig.

Bezüglich einer äußeren Formgebung kann der erfindungsgemäße Flansch insbesondere eine in axialer Richtung glatte Außenwand aufweisen, die insbesondere auch mit den an den Flansch angrenzenden Bauteilen glatt abschließt.

Die Erfindung betrifft zudem einen Rohrturm, bei dem der Rohrturm einen erfindungsgemäßen Flansch umfasst. Bevorzugt ist dabei zumindest eines der Bauteile als ein rohrförmiges Turmsegment des Rohrturms ausgebildet. Besonders bevorzugt handelt es sich dabei um einen Turm für eine Windkraftanlage. Solche Rohrtürme haben besondere Anforderungen an die Festigkeit der Flanschverbindungen, zumal sie regelmäßig Belastungen durch Wind ausgesetzt sind. Dabei greifen insbesondere erhebliche und wechselnde Biegemomente um die senkrechte Achse des Turmes an, gegenüber denen die Flanschverbindung dauerfest sein muss.

Bei einer allgemein bevorzugten Ausführungsform ist es dabei vorgesehen, dass das obere der Flanschteile das untere der Flanschteile radial nach außen überdeckt. Besonders bevorzugt ist dabei eine Unterkante des ersten Flanschteils umlaufend unterhalb einer Oberkante des zweiten Flanschteils angeordnet. Hierdurch wird in Verbindung mit den Dichtmitteln erreicht, dass kein Regen oder Schmutz zwischen die Flanschwände eindringen kann.

Zur optischen und aerodynamischen Verbesserung kann es insbeondere im Fall von Rohrtürmen vorgesehen sein, dass die Flanschteile im aneinander festgelegten Zustand eine durchgängig glatte Außenseite aufweisen.

Der Rohrturm bzw. der Turm einer Windkraftanlage kann auf beliebige Weise ausgebildet sein, zum Beispiel als kreisrunder Rohrturm auf einem landgestützten Fundament oder auch als Offshore-Turm. Ein Fundament eines Offshore-Turms kann in Monopile-Bauweise, in Jacket-Bauweise, in Tripile-Bauweise, in Tripod-Bauweise oder in sonstiger Bauweise ausgebildet sein. Zweckmäßig liegt zumindest ein rohrförmiger Abschnitt vor, der mittels eines erfindungsgemäßen Flansches verbunden ist.

Besonders bevorzugt erfolgt die Verbindung zweier aufeinander folgender rohrförmiger Abschnitte des Turms mittels eines erfindungsgemäßen Flansches. Je nach Anforderungen kann aber auch ein rohrförmiger Abschnitt des Turms mit einer unteren Turmbasis oder mit einem oberen Kopfstück des Turms durch einen erfindungsgemäßen Flansch verbunden sein.

Zur Optimierung des Aufwandes an Material und zur Verringerung des Gewichts ist es allgemein vorteilhaft vorgesehen, dass eine maximale gesamte Dicke der festgelegten Flanschteile in radialer Richtung nicht mehr als das Fünffache, bevorzugt nicht mehr als das Dreifache, einer Wanddicke des rohrförmigen Abschnittes beträgt. Insbesondere bei einer Herstellung der Flanschteile z.B. mittels spanender Bearbeitung aus Profilteilen kann hierdurch Material im Vergleich zu Flanschen nach dem Stand der Technik eingespart werden.

Der erfindungsgemäße Flansch betrifft vor allem Rohrtürme von Großanlagen, weshalb ein bevorzugter Außendurchmesser der Flansche wenigstens 2 Meter, bevorzugt wenigstens 4 Meter, beträgt. Es kann sich je nach Anforderungen um eine Offshore-Windkraftanlage oder auch um eine landgestützte Windkraftanlage handeln.

Die Erfindung betrifft zudem eine Rohrleitung, bei der die Rohrleitung einen erfindungsgemäßen Flansch umfasst.

Die Erfindung betrifft zudem ein Verfahren zur Festlegung eines erfindungsgemäßen Flansches, gekennzeichnet durch die Schritte:
a. Bewegen des ersten Flanschteils und des zweiten Flanschteils in der axialen Richtung bis zur einer ersten Überlappung der Flanschwände, bei der die Dichtmittel den Zwischenraum abgrenzen;
b. Beaufschlagung des Zwischenraums mit einem Fluid unter definiertem Druck, so dass die Flanschwände radial elastisch voneinander wegbewegt werden;
c. Bewegen der Flanschteile in der axialen Richtung zur Erzielung einer vollständigen Überlappung, während der definierte Druck des Fluids anliegt;
d. Verringerung des Fluiddrucks, wobei die Flanschwände elastisch aufeinander gedrückt werden.

Der Druck des den Zwischenraum beaufschlagenden Fluids ist im Allgemeinen so gewählt, dass die Flanschwände eine Belastung erfahren, die sich im Bereich einer elastischen Deformation des Flanschmaterials befindet. Eine plastische bzw. dauerhafte Deformation wird vermieden.

In vorteilhafter Weiterbildung werden die Dichtmittel vor Schritt b. mit einem Fluid unter definiertem Druck beaufschlagt. Insbesondere kann der die Dichtmittel beaufschlagende Druck größer sein als der Fluiddruck in dem Zwischenraum, um eine gute Abdichtung zu gewährleisten.

Besonders bevorzugt handelt es sich bei der Festlegung des Flansches um einen Teil eines Aufbaus eines Rohrturms, bevorzugt für eine Windkraftanlage. Hierdurch kann die Montagezeit eines Turms verkürzt werden, wobei zugleich eine sichere Festlegung der Turmteile erzielt wird.

Weitere Vorteile und Merkmale der Erfindung ergeben sich aus dem nachfolgend beschriebenen Ausführungsbeispiel sowie aus den abhängigen Ansprüchen.

Nachfolgend werden mehrere bevorzugte Ausführungsbeispiele der Erfindung beschrieben und anhand der anliegenden Zeichnungen näher erläutert.
- Fig. 1: zeigt eine schematische Ansicht eines erfindungsgemäßen Turms einer Windkraftanlage.
- Fig. 2: zeigt eine schematische räumliche Schnittansicht eines ersten Ausführungsbeispiels eines erfindungsgemäßen Flansches.
- Fig. 3: zeigt eine Abwandlung des Beispiels aus Fig. 2.
- Fig. 4: zeigt einen Ausschnitt einer räumlichen Ansicht einer weiteren Abwandlung eines Flansches aus Fig. 2.
- Fig. 5: zeigt den Flansch aus Fig. 4 in einer Schnittansicht.
- Fig. 6: zeigt den Flansch aus Fig. 4 mit Mitteln zur Ausübung einer Montagekraft in Umfangsrichtung.
- Fig. 7: zeigt eine schematische räumliche Schnittansicht eines zweiten Ausführungsbeispiels eines erfindungsgemäßen Flansches.
- Fig. 8: zeigt eine Abwandlung des Beispiels aus Fig. 7.
- Fig. 9: zeigt ein weiteres Ausführungsbeispiel der Erfindung mit einem bajonettartig verschließbaren Flansch.
- Fig. 10: zeigt eine Abwandlung des Beispiels aus Fig. 9.

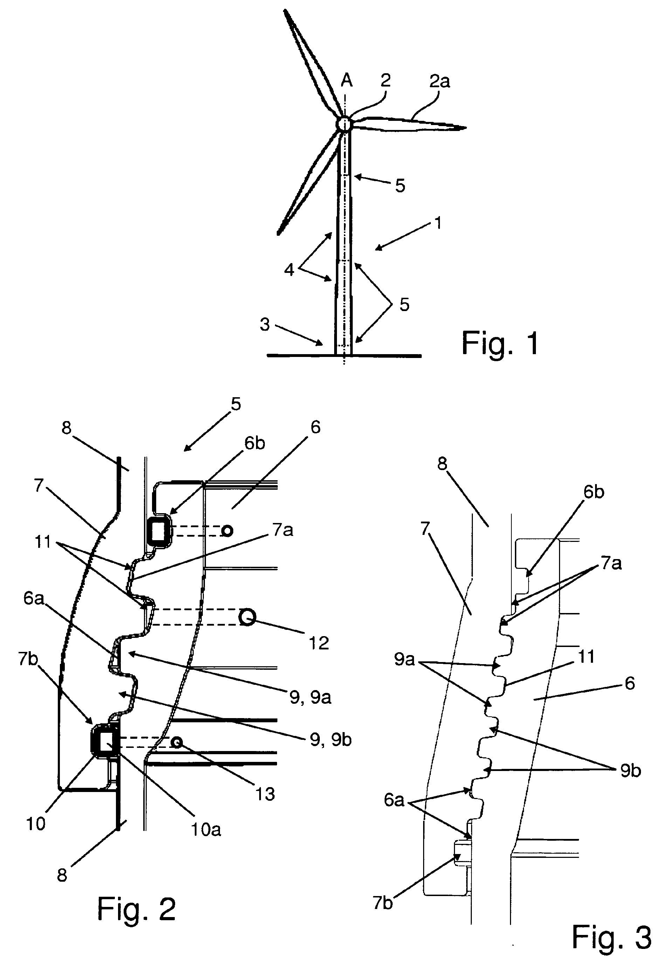

Die in Fig. 1 gezeigte Windkraftanlage ist als landgestützte Windkraftanlage ausgebildet und umfasst einen Turm 1 mit einem Windgenerator 2 an seinem oberen Ende. Der Turm 1 umfasst mehrere übereinander angeordnete Bauteile, unter anderem eine mit einem Fundament verbundene Turmbasis 3 und mehrere rohrförmige Abschnitte 4. Die Bauteile des Turms 1 sind mittels Flanschen 5 miteinander verbunden. Sofern nicht anders bezeichnet, bestehen die nachfolgend beschriebenen Bauteile und Flansche aus Stahl.

Zumindest einer der Flansche 5 des Turmes 1 ist vorliegend erfindungsgemäß ausgebildet. Dabei kann insbesondere jedes der nachfolgend beschriebenen Ausführungsbeispiele vorliegen. Es können mehrere, bevorzugt sämtliche der Flansche 5 des Turmes gemäß einem oder mehreren der erfindungsgemäßen Ausführungsbeispiele ausgebildet sein. Ein Turm mit einem erfindungsgemäßen Flansch kann je nach Anforderungen auch einen oder mehrere Flansche nach dem Stand der Technik aufweisen.

Fig. 2 zeigt ein erstes Beispiel der Erfindung. Der Flansch 5 umfasst ein erstes, inneres Flanschteil 6 und ein zweites, äußeres Flanschteil 7. An jedes der Flanschteile 6, 7 schließt sich vorliegend ein Bauteil des Turms 1 in Form eines rohrförmigen Abschnitts 8 an, der an das jeweilige Flanschteil angeschweißt ist. Vorliegend sind die Abschnitte 8 von kreisförmigem Querschnitt. Auch die Flanschteile 6, 7 sind im Wesentlichen als Rotationskörper um die zentrale Achse A des Turms 1 ausgebildet.

Das innere Flanschteil 6 hat eine radial nach außen weisende, innere Flanschwand 6a, und das äußere Flanschteil 7 hat eine radial nach innen weisende, äußere Flanschwand 7a.

Das äußere Flanschteil 7 greift mit seiner Flanschwand 7a vorliegend von oben über die Flanschwand 6a des inneren Flanschteils 6. Durch diese Überlappung wird zweckmäßig ein Eindringen von Schmutz oder Wasser in den Flansch verhindert. Ein Überlappungsbereich der Flanschwände 6a, 7a verläuft dabei in axialer Richtung zwischen den jeweiligen Enden der beiden Flanschteile 6, 7.

In den vorliegenden schematischen Beispielen ist am Ende des äußeren Flanschteils eine Stufe gegenüber dem angrenzenden Abschnitt 8 des unteren Bauteils vorhanden. Es versteht sich, dass die Formgebung der Flanschteile je nach Anforderungen auch so sein kann, dass der Turm im Flanschbereich eine glatte Außenwand aufweist.

Die Flanschwände 6a, 7a haben Abschnitte, die vorliegend um einen Winkel von etwa 12 Grad gegenüber der Achse A geneigt sind. Hierdurch haben die Flanschwände einen konischen Verlauf, der die Montage begünstigt. Im Bereich der Dichtmittel 10 sind die Flanschwände nicht geneigt bzw. als zylindrische Abschnitte ausgebildet.

Der mittlere Durchmesser des Flansches 5, der etwa dem Durchmesser der rohrförmigen Abschnitte 8 entspricht, beträgt im vorliegenden Beispiel 4,25 Meter.

Auf den Flanschwänden 6a, 7a sind jeweils in radialer Richtung vorragende Strukturen 9 ausgebildet. Im Fall des Beispiels nach Fig. 2 handelt es sich dabei um korrespondierende Gewindegänge 9a, 9b der beiden Flanschwände. Diese Gewindegänge 9a, 9b verkämmen in dem festgelegten Zustand, wie in Fig. 2 dargestellt.

Im vorliegenden Beispiel nach Fig. 2 sind 20 separate Gewindegänge vorgesehen. die Gewindegänge haben eine radiale Höhe von 24 mm über der jeweiligen Flanschwand. Eine Flanke der Gewindegänge hat eine Neigung von 8 Grad. Eine mittlere Dicke der Gewindegänge in axialer Richtung beträgt etwa 17 mm.

Die Steigung der 20 Gewindegänge ist so ausgelegt, dass die Flanschverbindung mittels eines Drehwinkels von etwa 30° festgelegt ist. Dies entspricht vorliegend einem Weg in Umfangsrichtung von etwa einem Meter. In der axialen Richtung wird durch die Verkämmung der Gewindegänge im Zuge der Drehbewegung in Weg von etwa 10 Zentimetern zurückgelegt. Die Gewindesteigung beträgt also etwa 6 Grad.

Erfindungsgemäß weist der Flansch Dichtmittel 10 auf, die einen Zwischenraum 11 zwischen den Flanschwänden 6a, 7a dichtend abgrenzen. Der Zwischenraum 11 kann über einen oder mehrere Anschlusskanäle 12 in der Flanschwand mit einem Fluid, vorliegend Hydrauliköl, befüllt und unter definierten Druck gesetzt werden.

Die Dichtmittel 10 sind hier als ringförmig umlaufende Dichtungen 10 aus einem elastischen Material, zum Beispiel einem Silikon, ausgebildet. Sie sind jeweils in umlaufende Ringnuten 6b, 7b der Flanschwände 6a, 7a eingelegt und stoßen zumindest in einem teilmontierten und im festgelegten Zustand an eine Dichtfläche der jeweils anderen, gegenüberliegende Flanschwand 6a, 7a an.

Die Dichtungen 10 weisen im Inneren einen umlaufenden Hohlraum 10a auf, der ebenfalls mit einem Fluid befüllbar und hierdurch mit definiertem Druck beaufschlagbar ist. Hierzu führen weitere Kanäle 13 in der Flanschwand zu den Dichtungen 10, deren Hohlraum entsprechende Verbindungen zu den Kanälen 13 aufweist (nicht dargestellt).

Der Druck in dem Zwischenraum bewirkt eine Herabsetzung der Reibung an den sich berührenden Gewindegängen. Bei ausreichendem Druck kann auch erreicht werden, dass die Gewindegänge sich allenfalls im Sinne einer axialen Führung berühren, aber keine radial wirkende Andruckkraft erfahren.

Bei einer Montage der des Flansches 5 bzw. des Turms 1 wird zunächst das untere Bauteil 8 senkrecht montiert. Nachfolgend wird das obere Bauteil 8 mit dem oberen Flanschteil 7 über das untere Flanschteil 6 gesetzt, bis die Enden der Gewindegänge miteinander in Eingriff geraten.

Nachfolgend werden die Flanschteile 6, 7 gegeneinander verdreht, wodurch die Gewindegänge weiter miteinander verkämmen und das obere Flanschteil 7 in axialer Richtung auf das untere Flanschteil 8 bewegt wird.

Sobald im Zuge dieser Montage die Dichtungen 10 an ihren Dichtflächen anliegend und der Zwischenraum geschlossen ist, werden die Dichtungen über die Kanäle 13 mit dem Fluid, zum Beispiel einem Hydrauliköl, druckbeaufschlagt.

Nachfolgend wird der Zwischenraum 11 über die Kanäle 12 ebenfalls mit Hydrauliköl gefüllt und druckbeaufschlagt. Zweckmäßig wird in den Dichtungen ein größerer Druck eingestellt als in dem Zwischenraum.

Durch den Druck in dem Zwischenraum 11 werden die Flanschwände 6a, 7a voneinander weg gedrückt und die Reibung der Gewindegänge wird erheblich reduziert. Zugleich stellt das Hydrauliköl ein Schmiermittel für das Gewinde dar.

In diesem Zustand kann zumindest ein letzter Abschnitt der Drehbewegung der Flanschteile bis zu einem abschließenden Sitz im festgelegten Zustand durchgeführt werden. Zuletzt wird der Druck in dem Zwischenraum und in den Dichtungen abgelassen.

Vorliegend ist es ausdrücklich erwünscht, das eine Menge von druckfreiem Hydrauliköl als Korrosionsschutz in dem Zwischenraum verbleibt. Hierzu können die Kanäle 12 entsprechend verschlossen werden.

Im vorliegenden Beispiel eines Flansches von 4,25 Metern Durchmesser wird ein Druck von etwa 8 bar in dem Zwischenraum benötigt, um die Reibung ausreichend zu reduzieren. Der Druck in den Dichtungen wird auf etwa 12 bar eingestellt. Zur Erzielung einer ausreichenden Vorspannung der Verbindung der Flanschteile wird in Umfangsrichtung eine Kraft von etwa 110 kN benötigt. Dies kann zumindest im letzten Abschnitt der Drehbewegung durch in Umfangsrichtung wirkende Hydraulikwerkzeuge erreicht werden. Diese können etwa an Zapfen, Bohrungen oder anderen Strukturen in der Flanschwand angreifen (nicht dargestellt).

Der Flansch des vorliegenden Beispiels hat nach Wegnahme des Drucks in dem Zwischenraum eine Vorspannung von knapp 13.000 kN in axialer Richtung. Solche Vorspannungen sind beim Bau von Türmen für Windkraftanlagen je nach Art und Größe der Anlage vorgegeben und können mit der erfindungsgemäßen Gestaltung und Festlegung von Flanschen erzielt werden. Durch die erfindungsgemäße Beaufschlagung des Zwischenraumes mit Fluiddruck wird die zur Erreichung der genannten Vorspannung erforderliche Anzugskraft in der Umfangsrichtung um einen Faktor von etwa 50 reduziert.

Fig. 3 zeigt eine Abwandlung des Flansches aus Fig. 2, wobei die Dichtmittel nicht dargestellt sind. Der Flansch aus Fig. 3 hat einen Durchmesser von 4,0 Metern, wobei der Überlapp der Flanschwände 6a, 7a in axialer Richtung deutlich größer ist als im Beispiel nach Fig. 2. Die Anzahl und Dimensionierung der Gewindegänge ist unverändert. Durch den größeren Überlapp ist der Flansch für größere axiale Vorspannungen auslegbar, vorliegend etwa 43.000 kN. Hierfür werden entsprechend höhere Montagekräfte in Umfangsrichtung benötigt.

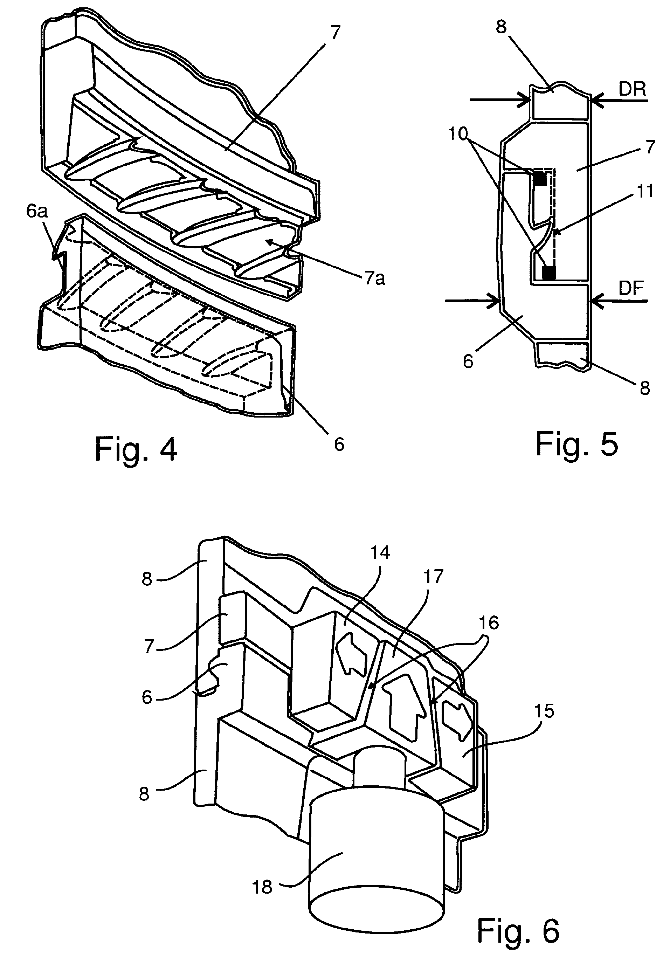

Fig. 4 zeigt eine schematische räumliche Darstellung eines abgewandelten Flansches gemäß der Erfindung. Bei diesem Flansch sind in Fig. 4 keine Dichtmittel zur Isolierung des Zwischenraums 11 im Gewindebereich gezeigt, werden aber auf einfache zu den vorhergehenden Beispielen analoge Weise angebracht (schematische Darstellung der Dichtmittel 10 in Fig. 6).

Weiterhin zeigt dieses Ausführungsbeispiel eine Realisierung eines erfindungsgemäßen Flansches, bei der eine Außenwand des Turmes 1 im Bereich des Flansches 5 durchgängig glatt ausgebildet ist. Die Flanschteile 6, 7 setzen sich an der Außenwand auf gleichem Radius wie die Außenwände der rohrförmigen Abschnitte 8 fort.

Ein Vorsprung über die Abschnitte 8 erfolgt lediglich radial nach innen. Die maximale Dicke DF der verkämmten Flanschteile 6, 7 in radialer Richtung ist vorliegend nur etwa doppelt so groß wie eine Dicke DR der rohrförmigen Abschnitte 8.

Fig. 6 zeigt ein weiteres Detail des Flansches aus Fig. 4. Dabei können die Flanschteile 6, 7 relativ zueinander verstemmt werden, um zumindest einen letzten Abschnitt der Verdrehbewegung mittels einer hohen Antriebskraft zu unterstützen. Hierzu sind in derselben Ebene Paare von Widerlagern 14, 15 in Form radial nach innen vorragender Blöcke an den Flanschteilen 6, 7 vorgesehen. Das erste Widerlager 14 ist an dem oberen Flanschteil 7 vorgesehen und das zweite Widerlager 15 an dem unteren Flanschteil 6.

Die Widerlager 14, 15 haben zueinander gerichtete, geneigte Seitenflächen 16, zwischen die ein keilförmiges Werkzeug 17 zur Ausübung einer Antriebskraft der Verstellung eingesetzt werden kann. Das Werkzeug 17 kann mittels eines hydraulischen Antriebs 18 zwischen die Flächen 16 der Widerlager 14, 15 getrieben werden, um gemäß der in Fig. 6 gezeigten Pfeile ein Verstemmen der Flanschteile 6, 7 in der Drehrichtung zu bewirken.

Es versteht sich, dass zweckmäßig mehrere Paare von Widerlagern 14, 15 über den Umfang des Flansches 5 verteilt vorgesehen sind.

In dem verkämmten Zustand der Flanschteile 14, 15 kann zudem ein Sperrglied (nicht dargestellt) vorgesehen sein, mittels dessen ein Rückdrehen der Flanschringe dauerhaft vermieden werden kann. Ein solches Sperrglied kann zum Beispiel nach Art des keilförmigen Werkzeugs 17 ausgebildet sein, welches in der Darstellung nach Fig. 6 zugleich eine formschlüssige Blockade gegen ein Rückdrehen der Flanschteile 6, 7 ausbildet. Andere Ausformungen eines solchen Sperrgliedes sind denkbar, zum Beispiel eine Verschraubung, eine Verschweißung oder Ähnliches.

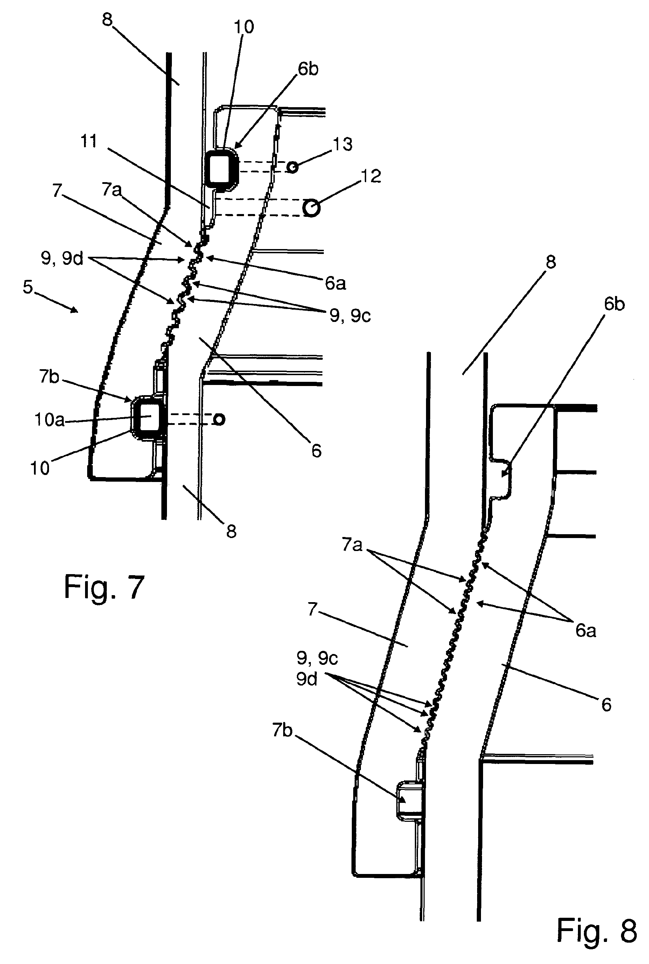

Fig. 7 zeigt einen Flansch 5 gemäß einem zweiten Ausführungsbeispiel der Erfindung. Der Flansch 5 des Beispiels aus Fig. 7 entspricht in seinem Durchmesser, dem Konuswinkel der Flanschwände 6a, 7a und den weiteren Anforderungen an eine Vorspannung dem Beispiel aus Fig. 2.

Im Unterschied zum Beispiel aus Fig. 2 sind die in axialer Richtung formschlüssig verkämmenden Strukturen 9 nicht als Gewindegänge ausgebildet. Vielmehr handelt es sich um über die Flanschwände 6a, 7a radial vorragende Vorsprünge, die vorliegend als konzentrische Ringe 9c, 9d an den jeweiligen Wänden ausgebildet sind. Die Ringe haben jeweils eine radiale Höhe von 2 mm, eine axiale Breite von 2 mm und eine Flanke mit einer Neigung von 8 Grad gegenüber einer Senkrechten der Flanschwand. Im Beispiel nach Fig. 7 sind auf jeder Flanschwand 6a, 7a jeweils etwa 7 parallele Ringe nebeneinander vorgesehen.

Die Dichtungen 10, die Kanäle 12, 13 und der Zwischenraum 11 entsprechen dem Beispiel nach Fig. 2.

Um die in Fig. 7 gezeigte formschlüssige Verkämmung der Strukturen bzw. Ringe 9c, 9d herzustellen, wird der Flansch im Zuge seiner Montage durch das Fluid in dem Zwischenraum 11 so weit mit Druck beaufschlagt, dass die Strukturen in axialer Richtung übereinander geschoben werden können. Der Druck bewirkt dabei eine elastische Aufweitung des Zwischenraums 11 um einen ausreichenden radialen Hub.

Vorliegend wird dabei der Zwischenraum um mindestens 2 mm, also die Höhe der Ringe, aufgeweitet. Bezogen auf den Gesamtdurchmesser des Flansches von gut 4 Metern entspricht dies einer relativen Aufweitung des Durchmessers der äußeren Flanschwand 7a von rund einem Tausendstel. Bei dieser Betrachtung wird idealisiert angenommen, dass die innere Flanschwand keine elastische Änderung ihres Durchmessers erfährt.

Solche Dehnungen sind für übliche Stähle, die im Bau von Windtürmen verwendet werden, ohne Weiteres erzielbar. Für den beispielhaften Flansch wird hierzu ein Druck von etwa 18 bar in dem Zwischenraum benötigt. Die Dichtungen 10 werden zweckmäßig mit einem höheren Druck von etwa 25 bar beaufschlagt.

Die Montage des Flansches 5 aus Fig. 7 verläuft daher wie folgt:
Zunächst wird das untere Bauteil 8 mit dem unteren Flanschteil 6 senkrecht montiert und festgelegt. Dann wird das obere Bauteil mit dem oberen Flanschteil 7 aufgesetzt, bis die Dichtung an ihren Dichtflächen anliegen und den Zwischenraum 11 abschließen. In diesem Zustand verkämmen die Strukturen 9 aufgrund des konischen Verlaufs der Wände noch nicht miteinander.

Nachfolgend werden die Dichtungen 10 und der Zwischenraum 11 unter Druck gesetzt, so dass die Wände 6, 7 um mehr als 2 mm voneinander weg gedrückt werden. Aufgrund des Konus der Wände erzeugt die eine die Flanschteile trennende Kraft in axialer Richtung, die in der Größenordnung von 50 Tonnen liegt. Diese Kraft kann durch das Eigengewicht des oberen Bauteils, eventuelle Zusatzgewichte oder hydraulische Werkzeuge kompensiert werden.

Nachfolgend wird das obere Flanschteil 7 weiter über das untere Flanschteil 6 verschoben, wobei die Strukturen bzw. Ringe 9 übereinander weg bewegt werden.

Zuletzt wird der Druck in dem Zwischenraum 9 abgelassen, so dass die Flanschwände 6, 7 sich wieder aufeinander zu bewegen. Dabei verkämmen die Strukturen 9 formschlüssig miteinander. Durch entsprechende Formgebung, die Neigung der Flanken der Strukturen 9b, 9c etc. wird zudem die vorgegebene Vorspannung des Flansches im Zuge der Verkämmung erzielt.

Wie im ersten Ausführungsbeispiel ist es erwünscht, dass das Hydrauliköl als Korrosionsschutzmittel druckfrei in dem Zwischenraum 11 verbleibt.

Die Abwandlung nach Fig. 8 zeigt einen Flansch, der in seiner Dimensionierung und weiteren Auslegung dem Beispiel aus Fig. 3 entspricht. wie im Vergleich zwischen den Beispielen nach Fig. 2 und Fig. 7 besteht der Unterschied auch hier in der Formgebung der verkämmenden Strukturen 9, die entsprechend dem Beispiel aus Fig. 7 als konzentrische Ringe ausgebildet sind. Größe und Form der Ringe entspricht dem Beispiel nach Fig. 7. Entsprechend der axial längeren Überlappung der Flanschwände 6a, 7a sind mehr parallele Ringe, vorliegend etwa 21, vorgesehen. Dies kann zur Einstellung einer höheren axialen Vorspannung des Flansches genutzt werden. So können zum Beispiel die Flansche nach Fig. 2 und Fig. 7 jeweils in einem oberen Bereich eines Turms 1 einer Windkraftanlage Verwendung finden, da dort die auftretenden Momente an dem Turm geringer sind. Die Flansche nach Fig. 3 und Fig. 8 können entsprechend auch in einem unteren Bereich des Turms eingesetzt werden, da sie auf größere Festigkeit gegenüber an dem Turm 1 angreifenden Biegemomenten auslegbar sind.

Bei weiteren Ausführungsformen der Erfindung kann es sich auch um bajonettartige Strukturen handeln, die zum Beispiel erst in einer axialen Richtung aneinander vorbei geschoben werden und nachfolgend in Drehrichtung miteinander verkämmt werden.

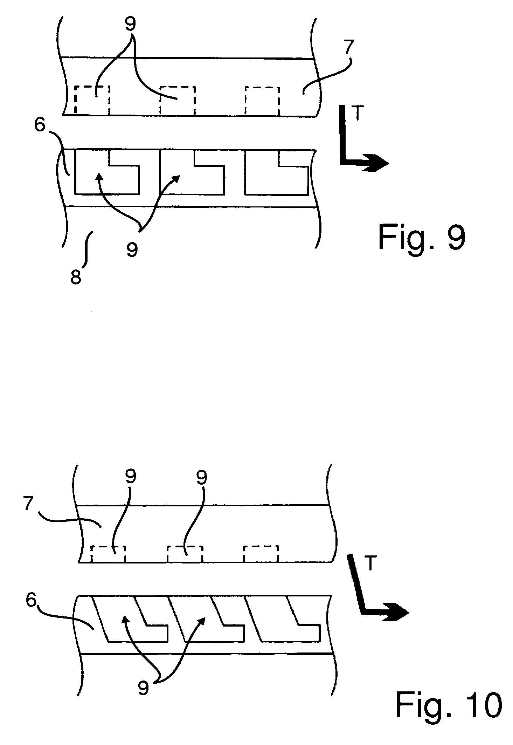

Fig. 9 zeigt ein solches Ausführungsbeispiel der Erfindung, bei dem die eine Struktur 9 eine Nut umfasst, die zumindest abschnittsweise parallel zu der Längsachse A verläuft. Die andere Struktur 9 am oberen Flanschteil 7 ist als radial nach außen ragender Vorsprung ausgebildet. Fig. 9 zeigt eine schematische Draufsicht auf eine Außenwand des Flansches 5. Die Dichtmittel sind nicht dargestellt.

Eine Trajektorie eines Punktes auf dem oberen Flanschteil 7 im Zuge eines formschlüssigen Verbindens der Flanschteile 6, 7 folgt zunächst einer senkrechten Linie nach unten, bis die radial vorragende Struktur 9 am unteren Ende des senkrechten Abschnitts der anderen Struktur 9 anschlägt. Nachfolgend erfolgt eine rein rotatorische Bewegung des oberen Flanschteils 7 nach rechts bzw. entgegen dem Uhrzeigersinn. Die Trajektorie ist in ihrem Verlauf auch durch den Pfeil T dargestellt. Die obere Struktur 9 bewegt sich dabei waagerecht in eine Hinterschneidung der im Wesentlichen L-förmigen unteren Struktur 9. Hierdurch wird eine formschlüssige Verkämmung in der axialen Richtung hergestellt. Dieser letzte, waagerechte Bewegungsabschnitt verläuft ausschließlich in einer Flanschebene und senkrecht zu der Längsachse A.

Fig. 10 zeigt eine Abwandlung des Beispiels aus Fig. 9, bei der zunächst ein schräger Verlauf der Trajektorie wie im ersten Ausführungsbeispiel erfolgt. Danach erfolgt ein rein rotatorischer Abschnitt der Bewegung, bei der die obere Struktur 9 ebenso wie im Beispiel nach Fig. 9 in einem waagerechten bzw. rein rotatorischen Bewegungsabschnitt eine Hinterschneidung der unteren Struktur 9 verbracht wird. Die Trajektorie des Beispiels nach Fig. 10 ist ebenfalls als Pfeil T dargestellt.

Die Strukturen 9 können je nach Anforderungen auch so geformt sein, dass in einem letzten Abschnitt der Bewegung eine definierte, insbesondere eine Rückdrehung hemmende Verspannung der Flanschringe in senkrechter Richtung erzielt wird. Hierzu können die Oberflächen der Strukturen 9, insbesondere zum Beispiel der Hinterschneidungen, entsprechende flache Steigungen aufweisen.

## Patentansprüche

1. Flansch (5) zur Verbindung zweier Bauteile (8) eines Turms für eine Windkraftanlage, umfassend ein erstes, inneres Flanschteil (6), das mit dem ersten Bauteil (8) verbunden ist,
wobei das innere Flanschteil (6) eine radial nach außen gerichtete, eine zentrale Achse (A) umlaufende, innere Flanschwand (6a) aufweist,
ein zweites, äußeres Flanschteil (7), das mit dem zweiten Bauteil (8) verbunden ist,
wobei das äußere Flanschteil (7) eine radial nach innen gerichtete, um die Achse (A) umlaufende, äußere Flanschwand (7a) aufweist, wobei die äußere Flanschwand (7a) und die innere Flanschwand (6a) einander in einem festgelegten Zustand des Flansches entlang der Achse (A) in einem Überlappungsbereich überlappen, und wobei die Flanschwände (6a, 7a) einander in dem festgelegten Zustand zumindest teilweise berühren,
**dadurch gekennzeichnet,**
**dass** in einem nicht festgelegten Zustand des Flansches (5) in dem Überlappungsbereich ein Zwischenraum (11) zwischen den Flanschwänden (6a, 7a) durch Dichtmittel (10) abgegrenzt ist, wobei der Zwischenraum (11) während einer Montage durch ein Fluid mit einem Druck beaufschlagt ist.

2. Flansch nach Anspruch 1, **dadurch gekennzeichnet, dass** die Dichtmittel (10) zumindest eine umlaufende Dichtung umfassen, die einen einstellbaren Anpressdruck auf die Flanschwände (6a, 7a) ausübt.

3. Flansch nach Anspruch 2, **dadurch gekennzeichnet, dass** die Dichtung (10) einen umlaufenden Körper aus einem elastischen Material umfasst, wobei ein von dem Körper zumindest teilweise umfangener Hohlraum (10a) durch ein Fluid einstellbar druckbeaufschlagt werden kann.

4. Flansch nach einem der vorhergehenden Ansprüche, **dadurch gekennzeichnet, dass** das Fluid in dem Zwischenraum (11) als flüssiges Korrosionsschutzmittel ausgebildet ist und in dem festgelegten Zustand des Flansches in dem Zwischenraum (11) verbleibt.

5. Flansch nach einem der vorhergehenden Ansprüche, **dadurch gekennzeichnet, dass** an jeder der Flanschwände jeweils eine radial vorragende Struktur (9) angeordnet ist, wobei die Strukturen (9) der Flanschwände (6a, 7a) in dem festgelegten Zustand in der Richtung der Achse (A) formschlüssig miteinander verkämmen.

6. Flansch nach Anspruch 5, **dadurch gekennzeichnet, dass** die Strukturen (9) einen Gewindegang (9a, 9b) umfassen, wobei das Verkämmen der Strukturen (9) durch ein Verdrehen der Flanschteile zueinander erfolgt.

7. Flansch nach Anspruch 5 oder 6, **dadurch gekennzeichnet, dass** die Strukturen (9c, 9d) unter hydraulischer Druckbeaufschlagung des Zwischenraumes (11) in der axialen Richtung übereinander verschiebbar sind.

8. Flansch nach einem der vorhergehenden Ansprüche, **dadurch gekennzeichnet, dass** die innere Flanschwand (6a) einen kleinsten radialen Durchmesser von wenigstens 1 Meter, insbesondere wenigstens 2 Metern, aufweist.

9. Rohrturm für eine Windkraftanlage, umfassend einen Flansch nach einem der vorhergehenden Ansprüche.

10. Rohrturm nach Anspruch 9, **dadurch gekennzeichnet, dass** zumindest eines der Bauteile (8) als ein rohrförmiges Turmsegment des Rohrturms ausgebildet ist.

11. Rohrleitung, umfassend einen Flansch nach einem der Ansprüche 1 bis 8.

12. Verfahren zur Festlegung eines Flansches nach einem der Ansprüche 1 bis 8, **gekennzeichnet durch** die Schritte:
a. Bewegen des ersten Flanschteils (6) und des zweiten Flanschteils (7) in der axialen Richtung (A) bis zur einer ersten Überlappung der Flanschwände (6a, 7a), bei der die Dichtmittel (10) den Zwischenraum (11) abgrenzen;
b. Beaufschlagung des Zwischenraums (11) mit einem Fluid unter definiertem Druck, so dass die Flanschwände (6a, 7a) radial elastisch voneinander wegbewegt werden;
c. Bewegen der Flanschteile (6, 7) in der axialen Richtung zur Erzielung einer vollständigen Überlappung, während der definierte Druck des Fluids anliegt;
d. Verringerung des Fluiddrucks, wobei die Flanschwände (6a, 7a) elastisch aufeinander gedrückt werden.

13. Verfahren nach Anspruch 12, **dadurch gekennzeichnet, dass** die Dichtmittel (10) vor Schritt b. mit einem Fluid unter definiertem Druck beaufschlagt werden.

## Claims

1. Flange (5) for the connection of two components (8) of a tower for a wind turbine, comprising
a first, inner flange part (6) which is connected to the first component (8),
the inner flange part (6) having an inner flange wall (6a), the inner flange wall facing radially outwards and surrounding a central axis (A),
a second, outer flange part (7) which is connected to the second component (8),
the outer flange part (7) having an outer flange wall (7a) facing radially inwards and surrounding the central axis (A), wherein, in a mounted state of the flange, the outer flange wall (7a) and the inner flange wall (6a) mutually overlap in the direction of the axis (A) in an overlap region, and
wherein the flange walls (6a, 7a) are, at least partially, in mutual contact in the mounted state,
**characterized in that**
in a non-mounted state of the flange (5), a clearance (11) between the flange walls (6a, 7a) is being delimited by sealing means (10), wherein the clearance (11) is applied with a pressure by means of a fluid during an assemblage.

2. Flange according to claim 1, **characterized in that** the sealing means (10) comprise at least one circumferential gasket, the gasket applying an adjustable contact pressure onto the flange walls (6a, 7a).

3. Flange according to claim 2, **characterized in that** the gasket (10) comprises a circumferential body of an elastic material, wherein a cavity (10a) is at least partially surrounded by the body and can be adjustably applied with pressure by a fluid.

4. Flange according to one of the preceding claims, **characterized in that** the fluid in the clearance (11) is provided as a liquid anticorrosive and is remaining in the clearance (11) in the mounted state of the flange.

5. Flange according to one of the preceding claims, **characterized in that** a radially protruding structure (9) is provided at each of the flange walls, the structures (9) of the flange walls (6a, 7a) positively cogging with each other in the direction of the axis (A) in the mounted state.

6. Flange according to claim 5, **characterized in that** the structures (9) comprise a thread (9a, 9b), the cogging of the structures (9) being achieved by turning of the flange parts against each other.

7. Flange according to one of claims 5 or 6, **characterized in that** the structures (9c, 9d) can be moved one above the other in the axial direction when the clearance (11) is applied with hydraulic pressure.

8. Flange according to one of the preceding claims, **characterized in that** the inner flange wall (6a) has a smallest radial diameter of at least 1 meter, in particular of at least 2 meters.

9. Tubular tower for a wind turbine, comprising a flange according to one of the preceding claims.

10. Tubular tower according to claim 9, **characterized in that** at least one of the components (8) is provided as a tube-shaped tower segment of the tubular tower.

11. Pipeline, comprising a flange according to one of the claims 1 to 8.

12. Method for mounting a flange according to one of claims 1 to 8, **characterized by** the steps:
a. moving of the first flange part (6) und the second flange part (7) in the axial direction (A) as far as a first overlap of the flange walls (6a, 7a), the sealing means (10) delimiting the clearance (11) in the case of the first overlap;
b. application of a fluid under defined pressure to the clearance (11), such that the flange walls (6a, 7a) are elastically and radially moved away from each other;
c. movement of the flange parts (6, 7) in the axial direction in order to achieve a complete overlap, while the defined pressure of the fluid is being applied;
d. reduction of the fluid pressure, wherein the flange walls (6a, 7a) are elastically pressed upon each other.

13. Method according to claim 12, **characterized in that** a fluid under a defined pressure is applied to the sealing means (10) prior to step b.

## Revendications

1. Bride (5) de liaison entre deux composants (8) d'une tour d'une éolienne, comprenant
un premier élément de bride (6), intérieur, lié au premier composant (8), l'élément de bride intérieur (6) présentant une paroi intérieure de bride (6a) entourant un axe central (A), dirigée radialement vers l'extérieur,
un deuxième élément de bride (7), extérieur, lié au deuxième composant (8),
l'élément de bride extérieur (7) présentant une paroi extérieure de bride (7a) entourant l'axe (A), dirigée radialement vers l'intérieur,
dans laquelle la paroi de bride extérieure (7a) et la paroi de bride intérieure (6a) se recouvrent le long de l'axe (A) dans une zone de recouvrement dans un état fixé de la bride, et
dans laquelle les parois de bride (6a, 7a) sont au moins partiellement en contact mutuel dans l'état fixé,
**caractérisée en ce qu'**
un espace intermédiaire (11) est délimité par l'intermédiaire de moyens d'étanchéité (10) entre les parois de bride (6a, 7a) dans la zone de recouvrement dans un état non fixé de la bride (5), l'espace intermédiaire (11) étant soumis à une pression par l'intermédiaire d'un fluide pendant un montage.

2. Bride selon la revendication 1, **caractérisée en ce que** les moyens d'étanchéité (10) comprennent au moins une étanchéité périphérique, qui exerce une pression d'appui réglable sur les parois de bride (6a, 7a).

3. Bride selon la revendication 2, **caractérisée en ce que** l'étanchéité (10) comprend un corps périphérique constitué d'un matériau élastique, une cavité (10a) au moins partiellement entourée dudit corps pouvant être mise sous pression de manière réglable par l'intermédiaire d'un fluide.

4. Bride selon l'une des revendications précédentes, **caractérisée en ce que** le fluide forme un moyen liquide de protection contre la corrosion et reste dans l'espace intermédiaire (11) dans l'état fixé de la bride.

5. Bride selon l'une des revendications précédentes, **caractérisée en ce qu'**une structure (9) radialement saillante est agencée sur chacune des parois de bride, les structures (9) des parois de bride (6a, 7a) étant, dans l'état fixé, imbriquées l'une avec l'autre dans la direction de l'axe (A), par complémentarité de forme.

6. Bride selon la revendication 5, **caractérisée en ce que** les structures (9) comprennent un pas de filetage (9a, 9b), l'imbrication des structures (9) étant réalisée en faisant tourner les éléments de bride l'un par rapport à l'autre.

7. Bride selon la revendication 5 ou 6, **caractérisée en ce que** les structures (9c, 9d) peuvent être coulissées l'une sur l'autre dans la direction axiale en mettant l'espace intermédiaire (11) sous pression hydraulique.

8. Bride selon l'une des revendications précédentes, **caractérisée en ce que** la paroi intérieure de bride (6a) présente un plus petit diamètre radial d'au moins un mètre, en particulier au moins deux mètres.

9. Tour tubulaire pour une éolienne comprenant une bride selon l'une des revendications précédentes.

10. Tour tubulaire selon la revendication 9, **caractérisé en ce qu'**au moins un des composants (8) forme un segment tubulaire de la tour tubulaire.

11. Canalisation comprenant une bride selon l'une des revendications 1 à 8.

12. Procédé de fixation d'une bride selon l'une des revendications 1 à 8, **caractérisé par** les étapes :
a. Déplacer le premier élément de bride (6) et le deuxième élément de bride (7) dans la direction axiale (A) jusqu'à un premier recouvrement des parois de bride (6a, 7a), lors duquel les moyens d'étanchéité (10) délimitent l'espace intermédiaire (11) ;
b. Soumettre l'espace intermédiaire (11) à un fluide sous une pression définie, de sorte que les parois de bride (6a, 7a) sont séparées l'une de l'autre radialement élastiquement ;
c. Déplacer les éléments de bride (6, 7) dans la direction axiale pour réaliser un recouvrement total, pendant lequel la pression définie de fluide s'applique ;
d. Diminuer la pression de fluide, les parois de bride (6a, 7a) étant pressées l'une sur l'autre élastiquement.

13. Procédé selon la revendication 12, **caractérisé en ce que** les moyens d'étanchéité (10) sont soumis à une pression définie avec un fluide avant l'étape b..
